# EUROPÄISCHE PATENTANMELDUNG

(11) **EP 0 931 806 A1**
(43) Veröffentlichungstag der Anmeldung: **28.07.1999**
(21) Anmeldenummer: 99100298.1
(22) Anmeldetag: 09.01.1999
(51) Int. Cl.: C08G 77/442, C08F 283/12, C09D 5/02, C09D 7/02, C09D 17/00

(54) **Dispergiermittel zur Herstellung wässriger Pigmentpasten**

(30) Priorität: 22.01.1998 DE 19802295
(71) Anmelder: Th. Goldschmidt AG, 45127 Essen (DE)
(72) Erfinder: Esselborn, Eberhard, 45147 Essen (DE); Klein, Klaus-Dieter Dr., 45468 Mülheim (DE); Knebelkamp, Arno Dr., 45131 Essen (DE); Silber, Stefan Dr., 47804 Krefeld (DE); Stadtmüller, Stefan Dr., 45141 Essen (DE); Stüttgen, Andreas, 47167 Duisburg (DE); Wallhorn, Ellen, 45239 Essen (DE)

(57) **Zusammenfassung**

Die Erfindung betrifft ein Dispergiermittel für wäßrige Pigmentpasten auf Basis von Polysiloxan-Polyvinyl-Copolymeren sowie wäßrige Pasten aus anorganischen oder organischen Farbpigmenten, die 0,1 bis 50 Gew.-% dieser Dispergiermittel enthalten.

## Beschreibung

Die Erfindung betrifft Dispergiermittel für wäßrige Pigmentpasten auf Basis von Polysiloxan-Polyvinyl-Copolymeren.

Netz- und Dispergiermittel erleichtern bei der Herstellung von Farben und Lacken die Einarbeitung von Pigmenten und Füllstoffen, die als wichtige Formulierungsbestandteile das optische Erscheinungsbild und die physikalisch-chemischen Eigenschaften von Beschichtungen wesentlich bestimmen. Für eine optimale Ausnutzung müssen diese Feststoffe zum einen gleichmäßig in Lacken und Farben verteilt werden, zum anderen muß die einmal erreichte Verteilung stabilisiert werden Während der Herstellung und Verarbeitung von wäßrigen Pigmentpasten können nun zahlreiche Probleme auftreten:
- schwierige Einarbeitung der Pigmente, schlechte Benetzung
- hohe Viskositäten von Farbpasten, Farben und Lacken
- Sedimentbildung
- vertikales Ausschwimmen von Pigmenten (flooding)
- horizontales Ausschwimmen von Pigmenten (floating)
- geringer Glanzgrad
- geringes Deckvermögen
- ungenügende Farbstärke
- schlecht reproduzierbare Farbtöne, Farbtonwanderung
- zu hohe Ablaufneigung von Lacken.

Es fehlt daher nicht an Versuchen, wirksame Dispergieradditive für Feststoffe, insbesondere Pigmente, zur Verfügung zu stellen. So werden beispielsweise wasserlösliche, hydrophile Polyetherketten aufweisende Polyisocyanat-Additionsprodukte (EP-A-0 731 148), hydrophile Polyurethan-Polyharnstoffe (DE-A-44 16 336), Poly(meth)acrylate (US-A-3 980 602, WO 94/21701) sowie spezielle Polyester (WO 94/18260) als für diese Zwecke gut geeignete Dispergieradditive beschrieben.

Jedoch sind mit dem Einsatz solcher Produkte auch eine Vielzahl von Nachteilen verbunden. So sind häufig hohe Gehalte an Dispergieradditivzusätzen erforderlich, die erreichbaren Pigmentierungshöhen der Pasten sind unbefriedigend niedrig, die Stabilität der Pasten und damit deren Viskositätskonstanz ist unzureichend, Flokkulation und Aggregation lassen sich nicht immer vermeiden; vielfach mangelt es auch an der Farbtonkonstanz nach Lagerung der Pasten sowie an der Kompatibilität zu diversen Bindemitteln. Durch den Einsatz bekannter Dispergieradditive wird in vielen Fällen auch die Wasserfestigkeit oder Lichtbeständigkeit von Beschichtungen negativ beeinflußt, zudem der bei der Herstellung und Verarbeitung entstehende, unerwünschte Schaum zusätzlich stabilisiert.

Der vorliegenden Erfindung liegt daher die Aufgabe zugrunde, eine Vielzahl der genannten Nachteile zu überwinden, wobei die für die Verarbeitbarkeit wichtige Viskositätsstabilität der Pasten, die Farbtonkonstanz nach Lagerung der Pasten sowie die Wasserfestigkeit daraus hergestellter Beschichtungen positiv beeinflußt werden sollten.

Die Aufgabe wird erfindungsgemäß gelöst durch ein Dispergiermittel auf Basis von Polysiloxan-Polyvinyl-Copolymeren der allgemeinen Formel I 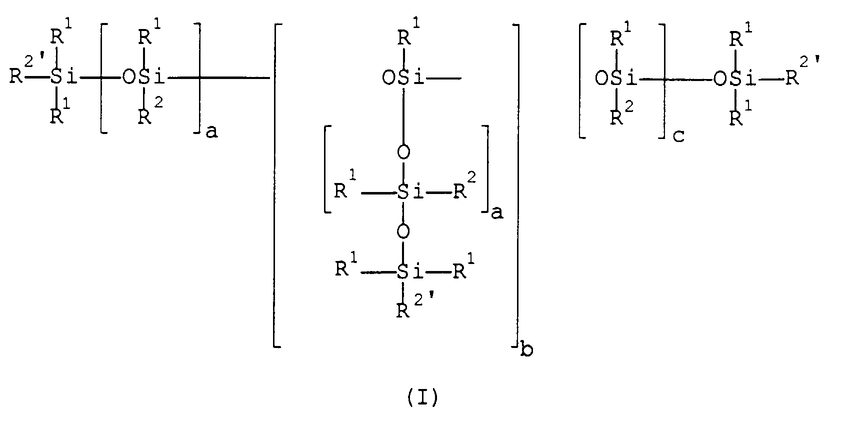 wobei
- a: = 0 bis 500,
- b: = 0 bis 50 und
- c: = 1 bis 50 ist,
und die Reste
- R¹: = gleiche oder verschiedene aliphatische oder aromatische Kohlenwasserstoffreste mit bis zu 8 C-Atomen sind, mindestens aber zu 80 % Methylreste sind,
- R²/R^{2'}: = R¹ oder der Rest -R³-S-pVi ist, mit der Maßgabe, daß mindestens ein Rest R² der Rest -R³-S-pVi ist, wobei R³ eine lineare oder verzweigte Alkylen- oder Arylengruppe mit 1 bis 24 C-Atomen ist und pVi ein Polymerblock aus Vinylderivaten ist.

Polysiloxan-Polyvinyl-Copolymere, die durch die Formel I gekennzeichnet sind, sind beispielsweise in EP-A-0 421 588 beschrieben. Darin werden beispielsweise Vinylsiliconcopolymere beschrieben, die über ein mercaptofunktionelles Siloxan als Kettenregler aufgebaut wurden und Einsatz in Trennbeschichtungen finden.

In US-A-5 468 477 beschreiben die Autoren die Darstellung von Polysiloxan-Polyolefin-Block- bzw. -Pfropfcopolymeren ebenfalls ausgehend von Mercaptosiloxanen. Diese Produkte finden Anwendung als Additive in kosmetischen Formulierungen.

Überraschenderweise wurde nun gefunden, daß derartige Verbindungen als besonders effektive Dispergiermittel von Pigmenten und Füllstoffen in wäßrigen Lackformulierungen eingesetzt werden können. Formulierungen auf Basis der erfindungsgemäßen Produkte zeichnen sich durch eine besonders hohe Lagerstabilität aus. Darüber hinaus gelang es zusätzlich, typische Siloxaneigenschaften, wie beispielsweise eine deutliche Hydrophobierung und damit eine Verbesserung der Wasserfestigkeit sowie Grenz- und Oberflächeneigenschaften, mit den konventionellen Dispergiereigenschaften organischer Polymerer synergistisch zu kombinieren.

Als vinylische Monomere werden vorzugsweise folgende Verbindungen eingesetzt:

Styrol, sübstituierte Styrole, α-Olefine, Vinylacetat, (Meth)acrylsäureester, (Meth)acrylamide, Vinylether, N-Vinylcarbazol.

Diese können entweder rein oder als Gemisch von verschiedenen Monomeren eingesetzt werden.

Ferner können als Monomere zur Pfropfcopolymerisation auch cyclische Monomere, die gegebenenfalls zusätzliche funktionelle Gruppen tragen, wie z. B. Maleinsäureanhydrid, Cycloolefine oder Cycloenone, eingesetzt werden.

Die erfindungsgemäßen Dispergiermittel auf Basis von Siliconpfropfcopolymeren weisen vorteilhaft ein Gewichtsverhältnis des Siloxans zu der aufgepfropften vinylischen (Co)-Monomermischung von 1 : 10 bis 1 : 2, bevorzugt ein Verhältnis von 1 : 6 bis 1 : 3, besonders bevorzugt ein Verhältnis von 1 : 5, auf. Bevorzugt ist dabei die Mischung der eingesetzten vinylischen Monomeren wie folgt zusammengesetzt:
- 1) 35 bis 45 %: eines Alkyl(meth)acrylates mit 1 bis 3 C-Atomen in der Kette
- 2) 35 bis 45 %: eines hiervon verschiedenen vinylischen Monomeren
- 3) 10 bis 30 %: Acrylsäure oder Methacrylsäure.

Als Ausgangsmaterialen zur Darstellung der Verbindungen, zusammengefaßt in der Formel I, dienen Polyorganosiloxane, vorzugsweise Dialkylsiloxane, welche Si-C gebundene organische Reste aufweisen. Die die Mercaptofunktion enthaltende Siloxaneinheit hat die nachstehende allgemeine Struktur II. Dabei können sich die Mercaptogruppen tragenden Einheiten innerhalb der Siloxankette und/oder am Anfang/Ende der Siloxankette befinden, so daß eine seiten- und/oder endständige Funktionalisierung erreicht wird. 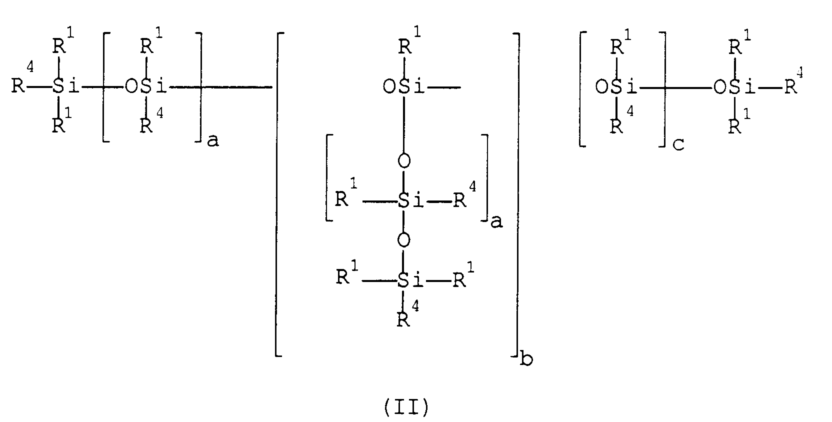
R¹, a, b und c haben die dafür bereits oben genannte Bedeutung,
R⁴ entspricht R¹ oder -R³-SH, wobei R³ die dafür bereits angegebene Bedeutung hat.

Beispiele für den Rest -R³-SH sind 3-Mercaptopropyl-, 2-Mercaptoethyl-, Mercaptomethyl-, 6-Mercaptohexyl-, 3-Mercaptopropylmethyl-, 3-Mercaptopropylhydroxy- oder Mercaptophenyl-.

Die Darstellung der durch Formel II gekennzeichneten mercaptofunktionellen Siloxane erfolgt nach bekannten Verfahren, wie beispielsweise in der EP-A-0 407 799 beschrieben.

Derartige Verbindungen werden durch Äquilibrierung der Gemische von linearen oder cyclischen Polyorganosiloxanen, z. B. Octaalkylcyclotetrasiloxan, mit entsprechenden mercaptoalkylfunktionalisierten Siloxanoligomeren in Gegenwart von sauren oder alkalischen Äquilibrierkatalysatoren erhalten. Als vorteilhaft erweist es sich bei diesem Verfahren, die mercaptoalkylfunktionellen Siloxanoligomeren in einer vorgeschalteten Reaktion durch Kondensation von Di- oder Trialkoxymercaptoalkylsilanen in Gegenwart von Wasser und Mineralsäuren, unter Abspaltung der entsprechenden Alkanole, herzustellen.

Das gebildete Produkt (= Rohhydrolysat) wird von Alkanolen und Wasser befreit.

Die mit Mercaptogruppen modifizierten Siloxan-Einheiten entsprechen der allgemeinen Formel III 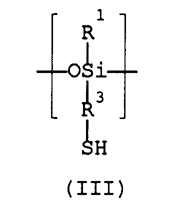 worin R¹ und R³ die oben angegebene Bedeutung haben.

Diese nach diesem Verfahren hergestellten Mercaptoalkylsiloxane sind in ihrem prozentualen Gehalt an Schwefel frei innerhalb der Grenzen von 0 bis 22 Gew.-% variierbar. Die Mercaptogruppen tragenden Einheiten sind statistisch im Siloxangerüst verteilt.

Als Ausgangsprodukte für die nachfolgende Pfropfcopolymerisation zur Darstellung von Dispergiermitteln für wäßrige Pigmentpasten dienen die in Tabelle 1 aufgeführten Beispiele:

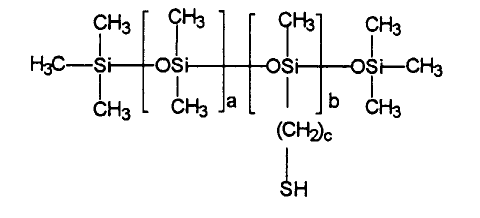

**Tabelle 1**

| Verbindung | a | b | c | %-Schwefel | MG |
|---|---|---|---|---|---|
| 1 | 9 | 3 | 3 | 7,6 | 1260 |
| 2 | 13 | 1 | 3 | 2,5 | 1270 |
| 3 | 27 | 5 | 3 | 5,5 | 2900 |
| 4 | 112 | 10 | 6 | 3,2 | 9900 |
| 5 | 50 | 5 | 6 | 3,5 | 4590 |

Die anschließende Polymerisation wird üblicherweise in der Form durchgeführt, daß man in einem Reaktor ein inertes Lösungsmittel, wie z. B. Toluol, vorlegt und die entsprechende Monomermischung gemeinsam mit dem mercaptogruppenhaltigen Siloxan und dem Initiator über einen definierten Zeitraum, der bei den gewählten Reaktionsbedingungen üblicherweise von der Halbwertszeit des verwendeten Initiators abhängig ist, zudosiert. Es ist dem Fachmann natürlich klar, daß auch eine getrennte Dosierbarkeit der einzelnen Komponenten in den Reaktor möglich ist, sofern eine Vormischung aus Sicherheitsaspekten nicht durchgeführt werden kann.

Als Initiator wird üblicherweise eine Azoverbindung, wie beispielsweise Azodiisobuttersäurenitril, eingesetzt. Darüber hinaus können auch andere Initiatorsysteme, wie sie dem Fachmann für die radikalische Polymerisation bekannt sind, zum Einsatz gelangen.

Beispiele geeigneter Polysiloxan-Polyvinyl-Copolymerer sind:

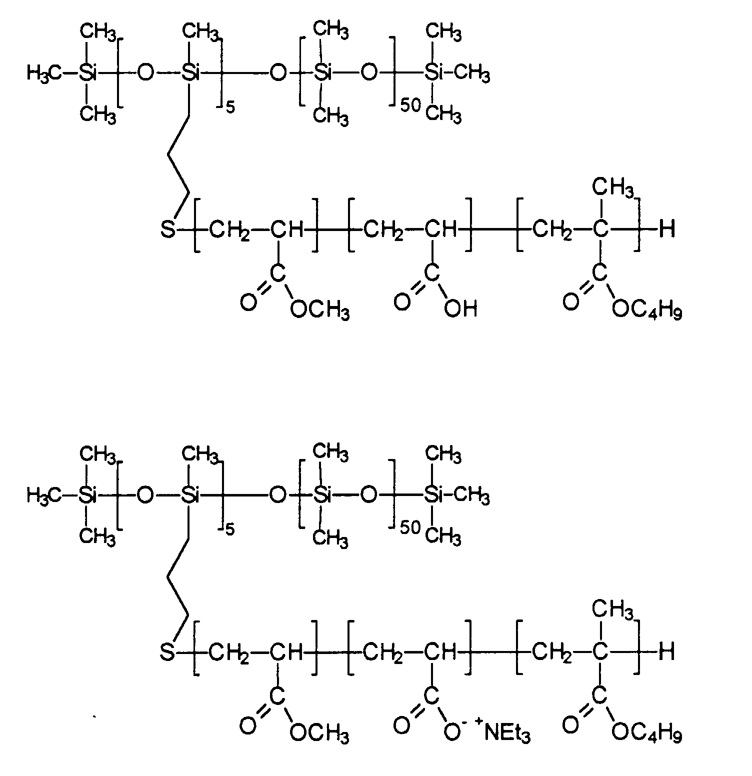

Diese Polysiloxan-Polyvinyl-Copolymeren werden vorteilhaft mit dem Stand der Technik entsprechenden Neutralisationsmitteln, insbesondere Aminen, neutralisiert. Insbesondere bevorzugt ist hier die Verwendung von Dimethylethanolamin oder 2-Amino-2-methylpropanol.

Die Darstellung der Polysiloxan-Polyvinyl-Copolymeren zur Anwendung als Dispergiermittel für wäßrige Pigmentpasten wird in den nachfolgenden Beispielen genauer erläutert.

### Beispiel 1

### Darstellung des mercaptogruppenhaltigen Rohhydrolysates

Zu 180 g δ-Mercaptopropyldimethoxymethylsilan, welches in einem Reaktionsgefäß vorgelegt, mit 5 g HCl konz. versetzt und auf 80 °C aufgeheizt wird, werden 40 g Wasser so zugetropft, daß gleichzeitig gebildetes Methanol kontinuierlich abdestilliert wird. Nach beendeter Zugabe wird solange weiter erhitzt, bis die stöchiometrische Menge an Methanol abgetrennt wird. Anschließend wird durch Destillation bei 10 Torr dieses Rohhydrolysat gereinigt.

### Beispiel 2

### Darstellung von Mercaptogruppen tragenden Polysiloxanen

Zur Darstellung der Verbindung 5 der in der Tabelle 1 angegebenen Mercaptopropylpolydimethylsiloxane werden 370 g Octamethylcyclotetrasiloxan, 16,2 g Hexamethyldisiloxan und 0,5 g Schwefelsäure auf 2 % China-Clay auf 100 °C aufgeheizt und bei dieser Temperatur 79,5 g der in Beispiel 1 synthetisierten Verbindung zugetropft. Anschließend wird die Reaktionstemperatur auf 140 °C erhöht und weitere 8 Stunden reagieren gelassen.

Nach Neutralisation mit Natriumcarbonat wird filtriert und anschließend im Ölpumpenvakuum von Flüchtigen befreit.

Gemäß ²⁹Si-NMR- und ¹³C-NMR-spektroskopischer Ergebnisse besitzt das Endprodukt nachfolgende Struktur

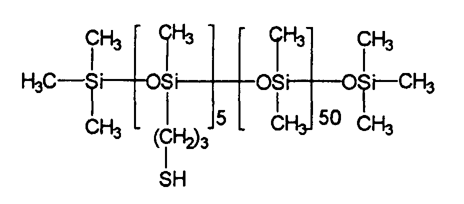

### Beispiel 3

Herstellung eines Polysiloxan-Poly(meth)acrylsaure(ester)-Blockmischpolymerisats durch radikalische Polymerisation einer Mischung von Methylacrylat, 2-Ethylhexylmethacrylat und Acrylsäure in Gegenwart eines mercaptogruppenhaltigen Polysiloxans

Eine Lösung von 85 g des in Beispiel 2 beschriebenen mercaptogruppenhaltigen Polysiloxans (MG = 4590), 140 g Methylacrylat, 140 g 2-Ethylhexylmethacrylat, 60 g Acrylsäure sowie 1,53 g Azodiisobuttersäurenitril (0,3 Gew.-% bezogen auf die eingesetzte Monomermischung) in 30 ml Toluol wird innerhalb von 3,5 h in einen mit 100 ml Toluol gefüllten Reaktor unter Normaldruck bei einer Temperatur von 100 °C zudosiert. Danach werden nochmal 1,02 g Azodiisobuttersäurenitril (entsprechend 0,2 Gew.-%) hinzugegeben und das Reaktionsgemisch zur Vervollständigung der Reaktion für weitere zwei Stunden bei der gleichbleibenden Temperatur von 100 °C belassen.

Der Umsatz des Monomeren ist nahezu quantitativ. Die gaschromatographische Untersuchung ergibt einen Restmonomerengehalt von < 0,1 %. Nach Entfernung des Toluols durch Destillation bei einem Druck von etwa 10 Torr verbleibt ein hochviskoses, transparentes Material mit einer Säurezahl von 110 mg KOH/g, welches ein Molekulargewicht Mn, ermittelt durch Gelpermeationschromatographie (THF/PMMA-Eichstandards), von 12 300 aufweist; der Uneinheitlichkeitskoeffizient beträgt 2,87.

### Beispiel 4

Herstellung eines Polysiloxan-Poly(meth)acrylsäure(ester)-Blockmischpolymerisats durch radikalische Polymerisation einer Mischung von Styrol, 2-Ethylhexylmethacrylat und Methacrylsäure in Gegenwart eines mercaptogruppenhaltigen Polysiloxans

Er wird verfahren wie in Beispiel 3 beschrieben mit dem Unterschied, daß anstelle des Methylacrylats eine entsprechende Menge an Styrol eingesetzt wird und anstelle von Acrylsäure Methacrylsäure verwendet wird. Als mercaptogruppenhaltiges Polysiloxan wird die in der Tabelle 1 beschriebene Verbindung 4 eingesetzt.

Man erhält ein leicht trübes Produkt mit einer Säurezahl von 90 mg KOH/g. Das Molekulargewicht Mn beträgt 21 500 bei einer Uneinheitlichkeit von 3,19.

### Herstellung von Pigmentpasten

Zur Herstellung wäßriger Pigmentpasten werden 0,1 bis 100 Gew.-% der idealerweise neutralisierten Siliconpoly(meth)acrylate, vorzugsweise 0,5 bis 50 Gew.-% (bezogen auf das Gewicht der Pigmente), verwendet. Die Siliconpoly(meth)acrylate können bei der erfindungsgemäßen Verwendung entweder vorab mit den zu dispergierenden Pigmenten vermischt werden oder direkt in dem Dispergiermedium (Wasser, eventuelle Glycolzusätze) vor oder gleichzeitig mit der Zugabe der Pigmente und etwaiger anderer Feststoffe gelöst werden.

Als Pigmente können in diesem Zusammenhang beispielsweise anorganische oder organische Pigmente sowie Ruße genannt werden.

Als anorganische Pigmente seien exemplarisch genannt Titandioxide, Eisenoxide, Spinelle. In Betracht zu ziehende organische Pigmente sind beispielsweise Azopigmente, Metallkomplex-Pigmente, anthrachinoide Pigmente, Phthalocyaninpigmente, polycyclische Pigmente, insbesondere solche der Thioindigo-, Chinacridon-, Dioxazin-, Pyrrolo-Pyrrol-, Naphthalintetracarbonsäure-, Perylen-, Isoamidolin(on)-, Flavanthron-, Pyranthron- oder Isoviolanthron-Reihe. Besonders bevorzugt eignen sich die erfindungsgemäßen Dispergieradditive zur Herstellung wäßriger Rußpasten.

Füllstoffe, die beispielsweise in wäßrigen Lacken dispergiert werden können, sind z. B. solche auf Basis von Kaolin, Talkum, anderen Silikaten, Kreide, Glasfasern, Glasperlen oder Metallpulvern.

Als Lacksysteme, in denen die erfindungsgemäßen Pigmentpasten aufgelackt werden können, kommen beliebige wäßrige 1K- oder 2K-Lacke in Betracht. Beispielhaft genannt seien wäßrige 1K-Lacke, wie beispielsweise solche auf Basis von Alkyl-, Acrylat-, Epoxid-, Polyvinylacetat-, Polyester- oder Polyurethanharzen, oder wäßrige 2K-Lacke, beispielsweise solche auf Basis von hydroxylgruppenhaltigen Polyacrylat- oder Polyesterharzen mit Melaminharzen oder gegebenenfalls blockierten Polyisocyanatharzen als Vernetzer. In gleicher Weise seien auch Polyepoxidharzsysteme genannt.

Die beschriebenen Siliconpoly(meth)acrylate können im übrigen auch als Netz- oder Dispergieradditiv bei der Einarbeitung von Feststoffen, insbesondere von Pigmenten in Kunststofformulierungen, verwendet werden.

Die als Dispergiermittel für wäßrige Pigmentpasten verwendeten Siliconpoly(meth)acrylate sind bezüglich des Siloxangrundgerüstes mit der allgemeinen Formel II zu beschreiben. Dabei haben die Reste R¹ und R³ sowie die Indices b und c die in der nachfolgenden Tabelle 2 gezeigten Bedeutungen bzw. Werte. In gleicher Weise sind die zur Polymerisation verwandten Gewichtsanteile der (Meth-)Acrylatmonomeren genannt. Alle erfindungsgemäßen und nichterfindungsgemäßen Polymerisate werden in Dipropylenglycolmonomethylether hergestellt und auf einen Festkörper von 50 % eingestellt.

**Tabelle 2**

| Verbindung lt. Formel (I) | R¹ | R^{2'} | R³ | c | b | Monomer 1 | Monomer 2 | Monomer 3 | MG |
|---|---|---|---|---|---|---|---|---|---|
| 1 | Me | Me | C₃H₆ | 3 | 0 | 35 % BA | 35 % MMA | 30 % AS | 50 000 |
| 2 | Me | Me | C₃H₆ | 2 | 0 | 40 % BMA | 40 % EHA | 20 % MAS | 42 000 |
| 3 | Me | Me | C₃H₆ | 5 | 0 | 45 % MMA | 35 % Sty | 20 % AS | 55 000 |
| 4 | Me | Me | C₃H₆ | 3 | 0 | 40 % BA | 45 % Sty | 15 % As | 40 000 |

Nichterfindungsgemäße Vergleichsbeispiele sind die nachfolgenden, mittels Dodecylmercaptan geregelten Rein(meth-)acrylatpolymerisate.

**Tabelle 3**

| Verbindung | Monomer 1 | Monomer 2 | Monomer 3 | MG |
|---|---|---|---|---|
| 5 | 35 % BA | 35 % MMA | 30 % AS | 55 000 |
| 6 | 40 % BMA | 40 % EHA | 20 % MAS | 44 000 |
| 7 | 45 % MMA | 35 % Sty | 20 % AS | 62 000 |
| 8 | 40 % BA | 45 % Sty | 15 % AS | 55 000 |

### Herstellung der Dispergierharzlösungen (Neutralisation)

Die vorgenannten erfindungsgemäßen und nichterfindungsgemäßen Harzlösungen in Dipropylenglycolmonomethylether werden nach Säurezahlbestimmung mit der jeweils erforderlichen Menge 2-Amino-2-methylpropanol neutralisiert und mit destilliertem Wasser auf einen Festkörper von 40 % eingestellt. Man erhält klare bis leicht trübe Lösungen, die als Additiv zur Herstellung wäßriger Pigmentpasten verwendet werden können.

### Herstellung der Pigmentpasten

### System 1

### Formulierung der Farbpaste:

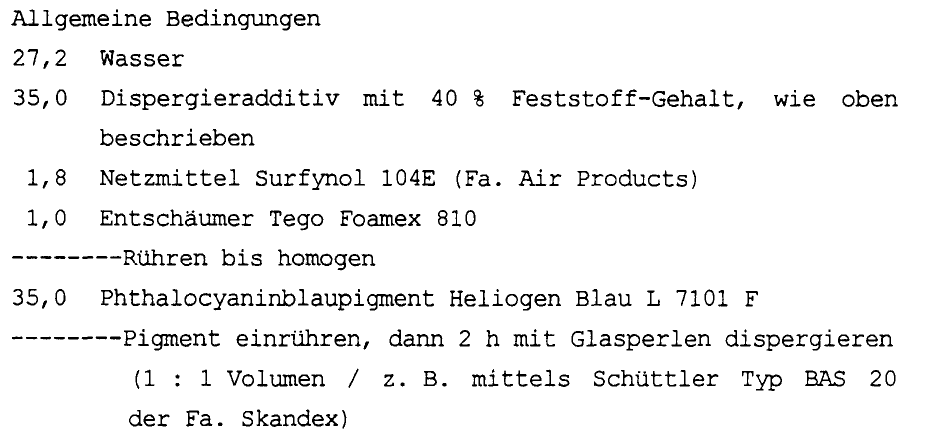

Diese erfindnngsgemäßen und nichterfindungsgemäßen Pasten werden mit einem käuflich erwerbbaren Weißlack (Marke Dulux Hochglanz-Wohnraumlack) im Verhältnis 50 g Lack/1,14 g Paste (entspricht einem Pigmentverhältnis 25 : 1) abgemischt und anschließend 5 min bei 1500 Upm homogenisiert.

### System 2

### Formulierung Farbpaste:

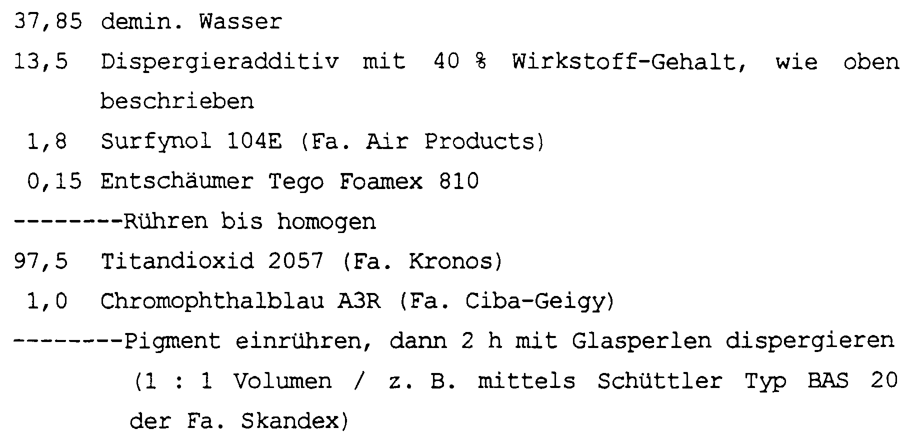

### Prüflack:

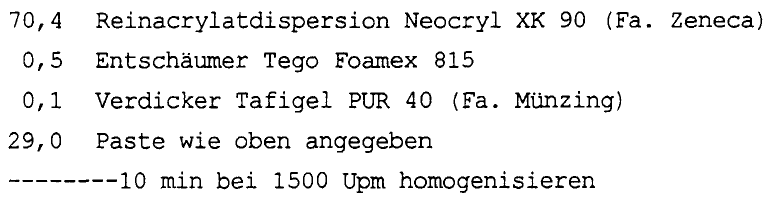

### Test der Pastenstabilitäten

Zur Ermittlung der Pastenstabilitäten werden bei zwei verschiedenen Schergefällen (20 1/s sowie 1000 1/s) die erreichbaren Anfangsviskositäten sowie die Viskositäten nach vierwöchiger Lagerung bei 50 °C bestimmt.

**Tabelle 4**

| (System 1) | | | | | | |
|---|---|---|---|---|---|---|
| Paste | Schergefälle D (1/s) | Viskosität in mPas | Viskosität 4w/50°C | Schergefälle D (1/s) | Viskosität in mPas | Viskosität 4w/50°C |
| 1 | 20 | 1800 | 2000 | 1000 | 95 | 120 |
| 2 | 20 | 1630 | 1850 | 1000 | 105 | 130 |
| 3 | 20 | 1510 | 1670 | 1000 | 110 | 140 |
| 4 | 20 | 1700 | 1910 | 1000 | 90 | 150 |
| 5 | 20 | 1730 | 2870 | 1000 | 100 | 240 |
| 6 | 20 | 1590 | 2640 | 1000 | 105 | 220 |
| 7 | 20 | 1540 | 2570 | 1000 | 105 | 250 |
| 8 | 20 | 1720 | 2700 | 1000 | 95 | 310 |

**Tabelle 5**

| (System 2) | | | | | | |
|---|---|---|---|---|---|---|
| Paste | Schergefälle | Viskosität in mPas | Viskosität 4w/50°C | Schergefälle | Viskosität in mPas | Viskosität 4w/50°c |
| 1 | 20 | 1600 | 1920 | 1000 | 115 | 140 |
| 2 | 20 | 1480 | 1720 | 1000 | 130 | 160 |
| 3 | 20 | 1400 | 1590 | 1000 | 108 | 130 |
| 4 | 20 | 1520 | 1800 | 1000 | 115 | 135 |
| 5 | 20 | 1530 | 2500 | 1000 | 100 | 310 |
| 6 | 20 | 1470 | 3030 | 1000 | 120 | 270 |
| 7 | 20 | 1680 | 2970 | 1000 | 125 | 280 |
| 8 | 20 | 1710 | 2680 | 1000 | 105 | 320 |

Aus dem jeweils signifikant geringeren Viskositätsanstieg läßt sich die überlegene Stabilität der erfindungsgemäßen Pigmentpasten 1 bis 4 leicht erkennen.

### Test der Dispergiereigenschaften

Aufzug der Testformulierungen mit 100 µm Naßfilmdicke auf Kontrastkarten; nach 6 min Trocknung Rub-Out-Test auf 1/3 der Fläche; nach Trocknung über Nacht farbmetrische Vermessung der Aufzüge mittels eines Spektralphotometers Typ XP 68 der Fa. X-Rite.

### Ergebnisse System 1

**Tabelle 6**

| Probe | Farbtiefe b | Δ b nach Rub-Out |
|---|---|---|
| 1 | -34,0 | 0,3 |
| 2 | -33,8 | 0,3 |
| 3 | -33,7 | 0,2 |
| 4 | -34,1 | 0,3 |
| 5 | -31,5 | 0,8 |
| 6 | -31,7 | 0,7 |
| 7 | -32,5 | 0,6 |
| 8 | -32,2 | 0,7 |

### Ergebnisse System 2

**Tabelle 7**

| Probe | Farbtiefe b | Δ b nach Rub-Out |
|---|---|---|
| 1 | -23,4 | 1,1 |
| 2 | -23,8 | 1,3 |
| 3 | -24,6 | 1,1 |
| 4 | -24,1 | 1,0 |
| 5 | -20,0 | 1,6 |
| 6 | -19,7 | 1,7 |
| 7 | -20,9 | 1,4 |
| 8 | -20,5 | 1,5 |

Zu erkennen ist die durch den Einsatz der erfindungsgemäßen Dispergieradditive erzielbare günstigere Farbstärkenentwicklung sowie der in allen Fällen günstigere Rub-Out-Test.

### Prüfung der Wasserfestigkeit

Aufzug des Prüflacks System 1 mit 100 µm Naßfilmdicke auf eine Aluminiumplatte und Belastung für 14 Tage im Schwitzwassertest (40 °C) nach 7 Tagen Trocknung bei RT.

**Tabelle 8**

| Probe | Film nach Schwitzwassertest |
|---|---|
| 1 | kaum Unterschied zur Probe im Normklima, Note 1 |
| 2 | kaum Unterschied zur Probe im Normklima, Note 1 |
| 3 | kaum Unterschied zur Probe im Normklima, Note 1 |
| 4 | kaum Unterschied zur Probe im Normklima, Note 1 |
| 5 | erkennbare Anquellung, Note 2 |
| 6 | erkennbare Anquellung, Note 2 |
| 7 | erkennbare Anquellung, Note 2 |
| 8 | erkennbare Anquellung, Note 2 |

Mit dem Einsatz der erfindungsgemäßen Dispergieradditive und Pigmentpasten ist demgemäß eine Verbesserung der Wasserfestigkeit daraus hergestellter Beschichtungen verbunden.

Wie aus den vorhergehenden Vergleichen ersichtlich ist, zeichnen sich die erfindungsgemäß zu verwendenden Verbindungen durch ihre universelle Anwendbarkeit sowie insbesondere durch die schaumfreie Herstellbarkeit der Pigmentpasten, erzielbare Pigmentierungshöhen und erreichbare Verbesserungen der Wasserfestigkeit aufgelackter Beschichtungen aus.

## Patentansprüche

1. Dispergiermittel für wäßrige Pigmentpasten auf Basis von Polysiloxan-Polyvinyl-Copolymeren der allgemeinen Formel (I) 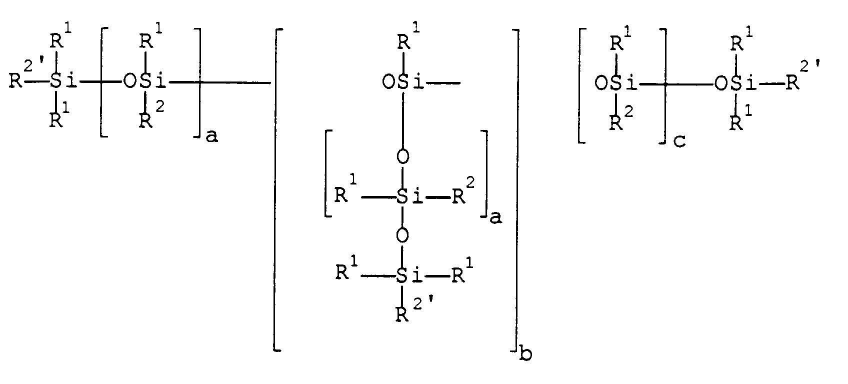 wobei
a = 0 bis 500,
b = 0 bis 50 und
c = 1 bis 50 ist,
und die Reste
R¹ = gleiche oder verschiedene aliphatische oder aromatische Kohlenwasserstoffreste mit bis zu 8 C-Atomen sind, mindestens aber zu 80 % Methylreste sind,
R²/R^{2'} = R¹ oder der Rest -R³-S-pVi ist, mit der Maßgabe, daß mindestens ein Rest R² der Rest -R³-S-pVi ist, wobei R³ eine lineare oder verzweigte Alkylen- oder Arylengruppe mit 1 bis 8 C-Atomen ist und pVi ein Polymerblock aus Vinylderivaten ist.

2. Dispergiermittel gemäß Anspruch 1, wobei der Polymerblock pVi aus gleichen und/oder verschiedenen ungesättigten Monomeren der Gruppe Styrol, (Meth)acrylsäure, (Meth)acrylsäureester, (Meth)acrylamide, Maleinsäureanhydrid und Vinylglycidylether aufgebaut ist.

3. Dispergiermittel gemäß den Ansprüchen 1 und 2, dadurch gekennzeichnet, daß das Gewichtsverhältnis von Polyvinylblock zu Polysiloxanblock 10 : 1 bis 2 : 1 beträgt, mit der Maßgabe, daß die Mischung der eingesetzten vinylischen Monomeren wie folgt zusammengesetzt ist:
1) 35 bis 45 % eines Alkyl(meth)acrylates mit 1 bis 3 C-Atomen in der Kette
2) 35 bis 45 % eines hiervon verschiedenen vinylischen Monomeren
3) 10 bis 30 % Acrylsäure oder Methacrylsäure.

4. Dispergiermittel gemäß Anspruch 3, wobei das Gewichtsverhältnis 5 : 1 bis 2 : 1 beträgt.

5. Dispergiermittel gemäß den Ansprüchen 1 bis 4, dadurch gekennzeichnet, daß der Anteil an gebundenem Schwefel im Siloxanblock 0,5 bis 20 Gew.-% beträgt.

6. Wäßrige Paste aus anorganischen oder organischen Farbpigmenten, enthaltend 0,1 bis 50 Gew.-% an Dispergiermitteln gemäß den Ansprüchen 1 bis 5.
